# EUROPÄISCHE PATENTSCHRIFT

(11) **EP 3 028 884 B1**
(45) Veröffentlichungstag und Bekanntmachung des Hinweises auf die Patenterteilung: **02.05.2018**
(21) Anmeldenummer: 15196182.8
(22) Anmeldetag: 25.11.2015
(51) Int. Cl.: B60G 11/28, B62D 61/12

(54) **HALTEEINHEIT**
HOLDER UNIT
UNITÉ DE SUPPORT

(30) Priorität: 02.12.2014 DE 102014117653
(43) Veröffentlichungstag der Anmeldung: 08.06.2016
(73) Patentinhaber: SAF-HOLLAND GmbH, 63856 Bessenbach (DE)
(72) Erfinder: Boschma, Klaas-Jan, 63857 Waldaschaff (DE)
(74) Vertreter: Müller Schupfner & Partner Patent- und Rechtsanwaltspartnerschaft mbB

(56) Entgegenhaltungen:
- EP-A1- 1 332 954
- EP-A1- 2 774 830
- WO-A1-2016/022024
- DE-T2- 69 917 105
- US-B1- 6 471 223

## Beschreibung

Die vorliegende Erfindung betrifft eine Halteeinheit für ein Achshebesystem eines Nutzfahrzeuges. Halteeinheiten sind aus dem Stand der Technik bekannt. So ist es insbesondere bekannt an dem Lagerbock des Rahmens eines Nutzfahrzeuges eine Halteeinheit schwenkbar zu lagern, wobei sich die Halteeinheit in ihrer Schwenkbewegung am Lagerbock abstützt, um in der entgegengesetzten Richtung einen Luftfederbalg abzustützen. Der Luftfederbalg dient dabei der Abstützung des Längslenkers eines Nutzfahrzeuges, um diesen anzuheben (Lift), und somit das Rad des Nutzfahrzeuges außer Eingriff mit der Straße zu bringen. Es ist weiterhin aus dem Stand der Technik bekannt eine Halteeinheit zweiteilig auszubilden, um einen einfachen Zusammenbau und eine einfache Demontage der Halteeinheit am Fahrwerk des Nutzfahrzeuges zu ermöglichen. Es hat sich aber gezeigt, dass insbesondere die Ausbildung der Halteeinheit und die Anordnung der Befestigungsmittel zum Zusammenbau der Halteeinheit nach wie vor eine ungünstige Form aufweisen, wodurch der Montageaufwand für die Herstellung, bzw. den Zusammenbau der Halteeinheit unnötig hoch ist. Weiterhin sind die aus dem Stand der Technik bekannten Halteinheiten zu ausladend ausgebildet und benötigen einen zu großen Bauraum am Fahrwerk des Nutzfahrzeuges.

Die DE 699 17 105 T2 offenbart eine Halteeinheit für ein Achshebesystem eines Nutzfahrzeugs, umfassend ein erstes Halteelement und ein zweites Halteelement, wobei das erste Halteelement einen ersten Lagerbereich und das zweite Halteelement einen zweiten Lagerbereich zur Lagerung der Halteeinheit schwenkbar um eine Schwenkachse an einem Lagerbock eines Nutzfahrzeugs aufweist.

Die EP 1 332 954 A1 und die WO 2016/022024 A1 offenbaren weitere Beispiele für Halteeinheiten für Achshebesysteme in Nutzfahrzeugen.

Aufgabe der vorliegenden Erfindung ist es, eine Halteeinheit bereitzustellen, welche zum einen einfacher zu montieren ist als die aus dem Stand der Technik bekannten Halteeinheiten, und welche zum anderen einen geringen Bauraumbedarf aufweist.

Diese Aufgabe wird gelöst mit einer Halteeinheit gemäß Anspruch 1. Weitere Vorteile und Merkmale der vorliegenden Erfindung ergeben sich aus den abhängigen Ansprüchen.

Erfindungsgemäß umfasst die Halteeinheit ein erstes Halteelement und ein zweites Halteelement, wobei das erste Halteelement einen ersten Lagerbereich und das zweite Halteelement einen zweiten Lagerbereich, zur Lagerung der Halteeinheit schwenkbar um eine Schwenkachse an einem Lagerbock eines Nutzfahrzeuges, aufweist, wobei das erste Halteelement einen Verbindungsbereich aufweist der entlang einer Parallelen zur Schwenkachse vom ersten Lagerbereich beabstandet ist und an einem zweiten Verbindungsbereich des zweiten Halteelements festlegbar ist, wobei der erste Verbindungsbereich ausgelegt ist, das zweite Halteelement parallel zur Schwenkachse abzustützen. Die Halteeinheit ist bevorzugt der Liftarm einer Achslift-Einrichtung eines Nutzfahrzeuges. Dabei ist die Halteeinheit vorzugsweise aus zwei Halteelementen zusammengefügt, wobei die Halteelemente bevorzugt als blechartige Teile ausgebildet sind. Besonders bevorzugt sind das erste Halteelement und das zweite Halteelement als Halbzeuge aus gebogenem Blech ausgebildet. Auf diese Weise sind die einzelnen Bauteile der Halteeinheit einfach, beispielsweise mittels Gesenkschmieden, herzustellen und weisen ein vorzugsweise nur sehr geringes Gewicht angesichts der übertragbaren Kräfte auf. Es ist vorgesehen, dass beide Halteelemente schwenkbar am Lagerbock eines Nutzfahrzeugrahmens festlegbar oder vorzugsweise festgelegt sind. Die schwenkbare Festlegung erfolgt dabei vorzugsweise über eine Lagerbuchse, welche selbst drehbar relativ zum Lagerbock ist, oder schwenkbar zu den als Aussparung ausgebildeten Lagerabschnitten der Halteelemente ist. Die Schwenkachse ist die Achse, um welche die Halteeinheit schwenkbar zum Lagerbock gelagert ist. Dabei liegt, bezogen auf das gesamte Nutzfahrzeug, die Schwenkachse vorzugsweise in der Horizontalebene, welche parallel zu dem Untergrund liegt, auf dem das Nutzfahrzeug steht. Neben der schwenkbaren Festlegung der Halteelemente am Lagerbock, weist das erste Halteelement vorzugsweise einen ersten Verbindungsbereich auf und das zweite Halteelement einen zweiten Verbindungsbereich, wobei die beiden Verbindungsbereich dafür ausgelegt sind, aneinander festgelegt zu werden. Der erste Verbindungsbereich ist dabei derart ausgebildet, dass er das zweite Halteelement, oder vorzugsweise an dessen zweiten Verbindungsbereich, in einer parallel zur Schwenkachse verlaufenden Richtung abstützt. Erfindungsgemäß ist ein Abschnitt am ersten Verbindungsbereich vorgesehen, welcher sich im Wesentlichen quer zur Schwenkachse erstreckt und somit als erster Anschlag für das zweite Halteelement dient. Auf diese Weise wird die Montage der Halteeinheit vereinfacht, da der Monteur zunächst das erste Halteelement am Lagerbock schwenkbar festlegen kann und anschließend das zweite Halteelement in seine Montageposition bringen kann, wobei sich dieses an dem ersten Halteelement abstützt. Insbesondere bevorzugt können im ersten Verbindungsbereich und/oder dem zweiten Verbindungsbereich Eingriffsmittel vorgesehen sein, welche eine Positionierung des zweiten Halteelements relativ zum ersten Halteelement und zum Lagerbock vereinfachen.

Vorzugsweise ist zur Festlegung des ersten Verbindungsbereiches am zweiten Verbindungsbereich nur ein einziges Verbindungsmittel vorgesehen. Das Verbindungsmittel ist vorzugsweise eine Schraube oder ein Bolzen. Dabei ist unter dem Begriff Verbindungsmittel vorzugsweise auch eine Kombination einer Schraube mit einer zugehörigen Mutter zu verstehen. Besonders bevorzugt ist die Mutter dabei gegen Verdrehung gesichert am ersten oder zweiten Verbindungsbereich festgelegt. Das Verbindungsmittel dient der form- und kraftschlüssigen Festlegung des zweiten Verbindungsbereiches am ersten Verbindungsbereich. Durch die Verringerung der Anzahl von Verbindungsmittel ist insbesondere die Montage der Halteeinheit vereinfacht, da der Anwender nur ein Verbindungsmittel hantieren und an dem Verbindungsbereich festlegen muss. Die Verbindungsbereiche sind vorzugsweise als aufeinander liegende, im Wesentlichen flächige Abschnitte des ersten Halteelements und des zweiten Halteelements ausgebildet, wobei besonders bevorzugt jeweils eine Bohrung oder Aussparung vorgesehen ist, in welcher das Verbindungsmittel eingreifen kann.

Erfindungsgemäß weist der erste Verbindungsbereich einen sich längs der Schwenkachse erstreckenden Querabschnitt und einen sich im Wesentlichen quer zur Schwenkachse erstreckenden ersten Anschlag auf, wobei der erste Anschlag vorzugsweise einstückig mit dem Querabschnitt ausgebildet ist. Der Querabschnitt des ersten Verbindungsbereiches erstreckt sich vorzugsweise entlang einer Parallelen zur Schwenkachse, wobei der erste Verbindungsbereich vorzugsweise blechartig ausgebildet ist, das heißt, dass eine Erstreckung quer zur Schwenkachse wesentlich geringer ist als seiner Erstreckung parallel zur Schwenkachse. Der erste Anschlag ist besonders bevorzugt ein Abschnitt des ersten Verbindungsbereiches, in welchem der erste Verbindungsbereich um einen Winkel im Bereich von 80° bis 110° gebogen ist. Besonders bevorzugt ist der erste Anschlag dabei einstückig mit dem Querabschnitt ausgebildet, wobei vorzugsweise der Verbindungsbereich als ein Blech ausgebildet ist, welches einen Querabschnitt und an dessen Ende angrenzend einen ungefähr senkrecht gebogenen Abschnitt aufweist, welcher als erster Anschlag ausgeführt ist. Mit anderen Worten sind der Querabschnitt und der Anschlag vorzugsweise einstückig mit dem ersten Halteelement ausgeführt. Besonders bevorzugt weist der Querabschnitt eine Erstreckung längs oder parallel zur Schwenkachse auf, welche im Wesentlichen gleich der Erstreckung des Lagerbocks längs oder parallel zur Schwenkachse ist. Es kann auf diese Weise erreicht werden, dass der zweite Verbindungsbereich am zweiten Halteelement an dem sich quer zur Schwenkachse erstreckenden, blechartigen Teil des zweiten Halteelements vorgesehen ist.

Besonders bevorzugt weist der Querabschnitt eine längs der Schwenkachse abnehmende Breite auf, wobei die Breite des Querabschnitts im Bereich des ersten Anschlages kleiner ist als ein 0,7-faches der Breite auf Höhe des ersten Lagerbereiches. Insbesondere um Material und damit Gewicht einzusparen und die Festigkeit des Querabschnitts optimal auf dessen tatsächliche Beanspruchung anzupassen, ist es bevorzugt, dass die Breite des Querabschnitts in Richtung des ersten Anschlages, bzw. in Richtung des zweiten Halteelements abnimmt. Vorzugsweise weist der Querabschnitt dabei im Bereich des ersten Anschlages eine breite auf, die kleiner ist als ein 0,7-faches der Breite auf Höhe des ersten Lagerbereiches. Als Höhe bezogen auf die Schwenkachse wird insbesondere eine Position definiert, welche in einer senkrecht zur Schwenkachse liegenden Ebene liegt. Die Breite des Querabschnitts wird vorzugsweise entlang einer Senkrechten zu einer Parallelen der Schwenkachse gemessen. In einem Anwendungsfall, bei dem es auf besonders niedriges Gewicht ankommt, ist es bevorzugt, dass die Breite des Querabschnitts im Bereich des ersten Anschlages kleiner ist als ein 0,5-faches der Breite auf Höhe des ersten Lagerbereiches, da auf diese Weise die Gewichtseinsparung besonders hoch ist. Es versteht sich, dass wenn eine höhere Festigkeit erforderlich ist die Breite des Querabschnitts im Bereich des ersten Anschlages bevorzugt ein 0,5-faches bis 0,7-faches der Breite auf Höhe des ersten Lagerbereiches ist.

In einer besonders bevorzugten Ausführungsform ist das zweite Halteelement am ersten Halteelement mit einem Verbindungsmittel festlegbar, welches für einen Anwender in einer parallel zur Schwenkachse verlaufenden Richtung zugänglich ist. Mit anderen Worten bedeutet dies, dass das Verbindungsmittel, vorzugsweise eine Schraube, von der Seite der Halteeinheit, bzw. von der Seite des Lagerbocks zugänglich ist, wodurch sich die Montage der Halteeinheit deutlich vereinfacht. Vorteilhaft ist hierbei auch, dass die Schraube während des Montagevorganges vom Anwender gesehen wird, ohne dass diese sich unter das Fahrwerk des Nutzfahrzeuges legt. Weiterhin ist vorteilhaft an dieser Ausführungsform, dass der Anwender nicht um die Ecke greifen muss, um das Verbindungsmittel in eine Position zu bringen, in welcher es am ersten und/oder am zweiten Halteelement festlegbar ist.

Weiterhin bevorzugt weist die Halteeinheit einen am ersten Halteelement ausgebildeten ersten Tragbereich und einen am zweiten Halteelement ausgebildeten zweiten Tragbereich auf, wobei eine Hubeinheit form- und kraftschlüssig an dem ersten Tragbereich und/oder dem zweiten Tragbereich festlegbar ist, wobei sich der erste Tragbereich und/oder der zweite Tragbereich im Wesentlichen planar zu einer Ebene erstrecken, die parallel zur Schwenkachse liegend. Besonders bevorzugt ist die Hubeinheit zumindest am ersten Tragbereich festgelegt. Der erste Tragbereich erstreckt sich dabei ähnlich dem ersten Verbindungsabschnitte im Wesentlichen entlang einer Ebene, die parallel zur Schwenkachse liegt. Am ersten Tragbereich und vorzugsweise auch am zweiten Tragbereich zweckmäßigerweise sind Eingriffsmittel vorgesehen mit welchen die Hubeinheit an dem ersten Tragbereich und vorzugsweise auch an dem zweiten Tragbereich festlegbar ist. Die Eingriffsmittel sind dabei bevorzugt als Aussparungen oder Bohrungen ausgelegt, in welche Schrauben eingreifen können, um die Hubeinheit form- und kraftschlüssig an zumindest dem ersten Tragbereich festzulegen. Die Ausbildung eines ersten Tragbereichs und eines zweiten Tragbereichs als im Wesentlichen blechartige Abschnitte des ersten und des zweiten Halteelements vereinfacht die Herstellung der Halteelemente beispielsweise durch Umformprozesse wie Gesenkschmieden.

Besonders bevorzugt weist der erste Tragbereich eine größere Erstreckung längs oder parallel zur Schwenkachse auf als der zweite Tragbereich. Ähnlich der Ausbildung des ersten Verbindungsbereiches, weist auch der erste Tragbereich eine größere Erstreckung längs oder parallel zur Schwenkachse auf, wobei es möglich wird, die Hubeinheit zunächst nur am ersten Tragbereich festzulegen, um anschließend das zweite Halteelement bereitzustellen und am Anschlag zur Anlage zu bringen und auch dem zweiten Tragbereich mit dem ersten Tragbereich und/oder der Hubeinheit in Eingriff zu bringen. Vorzugsweise weist der erste Tragbereich dabei vier Aussparungen auf, in welchen jeweils Eingriffsmittel, wie Schrauben zur Festlegung der Hubeinheit angeordnet werden können, wobei der zweite Tragbereich nur zwei Aussparungen aufweist, welche koaxial zu zweien der Aussparungen des ersten Tragbereichs angeordnet werden, um zwei der Eingriffsmittel mit dem ersten und dem zweiten Tragbereich gemeinsam an der Hubeinheit festzulegen. Als im Wesentlichen planare Erstreckung der Tragbereiche bezogen auf eine parallel zur Schwenkachse liegenden Ebene wird insbesondere definiert, dass die Tragbereiche eine bestimmte Materialdicke haben, diese sich aber über den gesamten Tragbereich nur geringfügig ändert und ansonsten der Tragbereich eine im Wesentlichen ebene Fläche aufweist.

In einer bevorzugten Ausführungsform ist der erste Tragbereich bereichsweise zwischen der Hubeinheit und dem zweiten Tragbereich angeordnet, wobei der zweite Tragbereich die Hubeinheit indirekt über den ersten Tragbereich abstützt. Bei dieser Ausführungsform ist es möglich, die Hubeinheit zunächst am ersten Tragbereich festzulegen, wobei nach Hinzufügen des zweiten Halteelements der zweite Tragbereich eine zusätzliche Abstützung des ersten Tragbereiches bezogen auf den Lagerbock bereitstellt. Da in einem ersten Fertigungsschritt zunächst nur das erste Halteelement am Lagerbock festgelegt und hantiert werden muss, wobei in einem nächsten Schritt die Hubeinheit am ersten Halteelement festgelegt wird und erst in einem dritten Schritt das zweite Halteelement an dem Verbund aus Lagerbock und erstem Halteelement festgelegt wird, muss der Monteur jeweils immer nur mit einem Bauteil hantieren, wodurch die Montage der Halteeinheit besonders vereinfacht ist.

In einer weiteren bevorzugten Ausführungsform ist der zweite Tragbereich als Aussparung des zweiten Halteelements ausgebildet, wobei der erste Tragbereich an seinem, an den zweiten Tragbereich grenzenden distalen Ende einen zweiten Anschlag aufweist, an welchem das zweite Halteelement abgestützt und festlegbar ist. Ähnlich der Ausbildung des ersten Verbindungsabschnitts mit einem ersten Anschlag, weist der erste Tragbereich einen zweiten Anschlag auf, an welchem das zweite Halteelement zur Anlage gebracht werden kann und mit seinem zweiten Tragbereich am ersten Tragbereich festlegbar ist. Der zweite Tragbereich ist dabei vorzugsweise als Aussparung ausgebildet, wobei der zweite Tragbereich vorzugsweise keine über die Materialdicke des zweiten Halteelements hinausgehender Erstreckung längs oder parallel zur Schwenkachse aufweist. Vorteilhaft bei dieser Ausführungsform ist, dass die Hubeinheit vollständig am ersten Tragbereich festlegbar ist und erst anschließend das zweite Halteelement mit seinem zweiten Tragabschnitt zur Unterstützung der Festigkeit der Halteeinheit am ersten Verbindungsabschnitte sowie am ersten Tragbereich festgelegt wird. Dabei ist vorzugsweise das Befestigungsmittel, beispielsweise eine Schraube, vorzugsweise entlang einer parallel zur Schwenkachse verlaufenden Richtung zugänglich. Mit anderen Worten ist also das Befestigungsmittel zur Festlegung des zweiten Tragbereiches am ersten Tragbereich von der Seite der Halteeinheit her zugänglich.

Bevorzugt ist am ersten Halteelement und/oder am zweiten Halteelement ein Stützelement festlegbar oder ausgebildet, wobei das Stützelement ausgelegt ist, die Verschwenkbarkeit der Halteeinheit bezogen auf den Lagerbock zu begrenzen. Das Stützelement ist vorzugsweise eine sich im Wesentlichen parallel zur Schwenkachse erstreckende Geometrie, welche bevorzugt am ersten Halteelement ausgebildet oder an diesem festlegbar ist. Insbesondere bevorzugt weist das Stützelement dabei einen rechteckigen Querschnitt auf, wobei es mit einer seiner äußeren Flächen am Lagerbock zur Auflage bringbar ist, um sich an diesem abzustützen. Das Stützelement begrenzt vorzugsweise die Verschwenkbewegung der Halteeinheit, um zu ermöglichen, dass die Hubeinheit sich an der Halteeinheit abstützt, um eine Kraft auf einen Längslenker des Nutzfahrzeuges zu übertragen. Besonders bevorzugt ist das Stützelement sowohl mit dem ersten Halteelement als auch mit dem zweiten Halteelement verschraubt.

Ferner bevorzugt weist der Lagerbock eine Vorderseite auf, welche einen orthogonalen Abstand von der Schwenkachse aufweist, wobei die Halteeinheit einen maximalen Versatz von einer durch die Vorderseite und parallel zur Schwenkachse verlaufenden Ebene aufweist, wobei der Versatz zum orthogonalen Abstand in einem Verhältnis von 0,01 bis 0,6 und bevorzugt von 0,03 bis 0,5 steht. Der Versatz der Halteeinheit von der Vorderkante ist insbesondere ein Ausdruck dafür, wie weit die Halteeinheit die Vorderkante des Lagerbock überragt. Je größer dieser Versatz ist, desto größer ist der von der Halteeinheit und dem Lagerbock gemeinsam eingenommene Bauraum. Vorzugsweise ist es, dass der Versatz zu einer Referenzgeometrie des Lagerbock nur eine gewisse, vorzugsweise geringe Größe aufweist. Als Referenzgeometrie des Lagerbocks wird hierbei der orthogonale Abstand der Vorderkante bzw. Vorderseite des Lagerbocks von der Schwenkachse definiert. Da an der Halteeinheit verschiedene Einbaupositionen für das Stützelement vorgesehen sind, kann auch die maximale Verschwenkung der Halteeinheit relativ zum Lagerbock verschiedene Werte annehmen und es erklärt sich hieraus der Bereich für den Versatz bezogen auf den orthogonalen Abstand. Besonders bevorzugt bleibt das Verhältnis des Versatzes zum orthogonalen Abstand in einem Verhältnis von 0,01 bis 0,6 wobei hierbei sämtliche Einbaupositionen des Stützelements an der Halteeinheit verwendet werden können, ohne dass die Halteeinheit zu viel Bauraum benötigt. In Versuchen der Anmelderin hat sich gezeigt, dass ein besonders bevorzugtes Ergebnis mit einem Verhältnis des Versatzes zum orthogonalen Abstand von 0,03 bis 0,5 erreicht werden kann. Hierbei ist die Halteeinheit gemeinsam mit dem Lagerbock besonders kompakt ausgelegt.

Weitere Vorteile und Merkmale der vorliegenden Erfindung ergeben sich aus der nachfolgenden Beschreibung bevorzugter Ausführungsformen mit Bezug auf die beigefügten Figuren. Es versteht sich, dass einzelne in bestimmten Ausführungsformen gezeigte Merkmale auch in den anderen Ausführungsformen Anwendung finden können, sofern dies nicht explizit ausgeschlossen wurde, oder sich aufgrund technischer Gegebenheiten verbietet. Es zeigen:
Fig. 1 eine perspektivische Ansicht des ersten Halteelement,
Fig. 2 eine Explosionszeichnung einer bevorzugten Ausführungsform der erfindungsgemäßen Halteeinheit,
Fig. 3 eine weitere Explosionsansicht einer weiteren bevorzugten Ausführungsform der erfindungsgemäßen Halteeinheit,
Fig. 4 eine Seitenansicht einer bevorzugten Ausführungsform der erfindungsgemäßen Halteeinheit, und
Fig. 5 eine perspektivische Ansicht einer bevorzugten Ausführungsform der erfindungsgemäßen Halteeinheit.

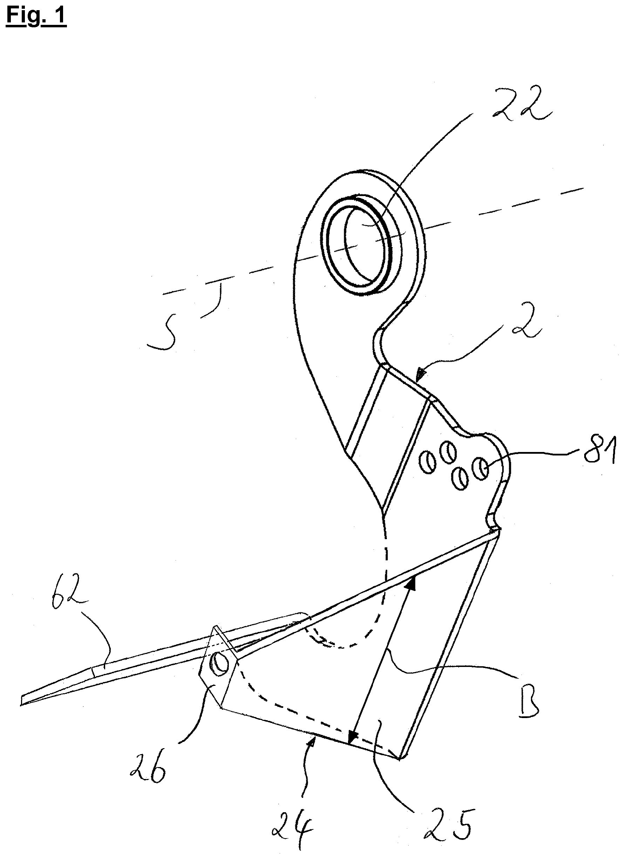

Das in Fig. 1 dargestellte erste Halteelement 2 weist einen ersten Lagerbereich 22, einen ersten Verbindungsbereich 24 und einen ersten Tragbereich 62 auf. Sämtliche Abschnitte des ersten Halteelements 2 sind vorzugsweise blechartig ausgebildet. Dargestellt ist weiterhin die Schwenkachse S, um welche schwenkbar das erste Halteelement 2 vorzugsweise an einem Lagerbock (nicht gezeigt) festlegbar ist. Der erste Lagerbereich 22 ist vorzugsweise rotationssymmetrisch um die Schwenkachse S ausgebildet. Der Verbindungsbereich 24 und der Tragbereich 62 erstrecken sich vorzugsweise blechartig entlang zweier Ebenen, welche jeweils parallel zur Schwenkachse S ausgebildet sind. Dabei weist der Verbindungsbereich 24 eine Erstreckung parallel oder längs der Schwenkachse S mit einer Breite B auf. Weiterhin weist der Verbindungsbereich 24 einen Querabschnitt 25 und einen sich im Wesentlichen senkrecht zum Querabschnitt 25 erstreckenden ersten Anschlag 26 auf. Am ersten Anschlag 26 kann vorzugsweise ein zweites Halteelement (nicht gezeigt) zur Anlage gebracht werden. Bevorzugt wird ein Eingriffsmittel verwendet, um das zweite Halteelement (nicht gezeigt) an der Bohrung des ersten Anschlages 26 festzulegen. Der erste Tragbereich 62 erstreckt sich ebenfalls vorzugsweise mit einer Breite B parallel zur Schwenkachse S und dient insbesondere der Festlegung einer Hubeinheit (nicht gezeigt) an dem ersten Halteelement 2. Das erste Halteelement 2 weist vorzugsweise mehrere Befestigungspositionen 81 zur Festlegung eines Stützelements 8 auf. Im vorliegenden Beispiel sind vier Befestigungspositionen 81 bevorzugt, wobei je nach Auswahl der Befestigungspositionen 81 für das Stützelement 8 die Halteeinheit 1 einen größeren oder kleineren Schwenkbereich aufweist.

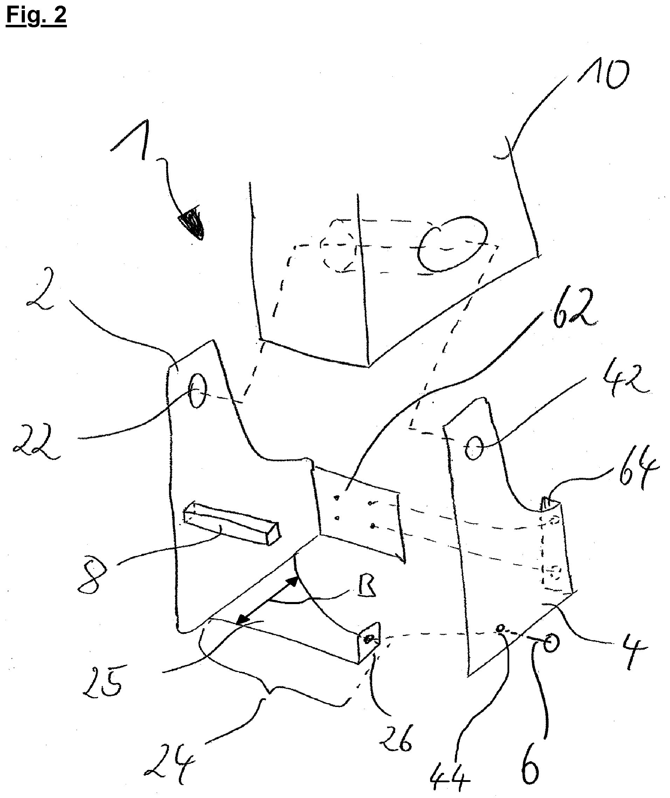

Bei der in Fig. 2 dargestellten bevorzugten Ausführungsform der Halteeinheit 1 ist neben dem ersten Halteelement 2 auch ein zweites Halteelement 4 vorgesehen. Das zweite Halteelement 4 wird mit seinem zweiten Verbindungsbereich 44, der vorzugsweise als Bohrung ausgelegt ist, am ersten Anschlag 26, sowie mit seinem zweiten Tragbereich 64 am ersten Tragbereich 62 festgelegt. Im zusammengebauten Zustand ist zwischen dem ersten Halteelement 2 und dem zweiten Halteelement 4 ein Stützelement 8 angeordnet, mittels welchem sich die Halteeinheit 1 am Lagerbock 10 abstützt, wenn die Verschwenkung der Halteeinheit 1 relativ zum Lagerbock 10 einen bestimmten Wert erreicht hat. Mit gestrichelten Linien ist dargestellt, welche Bohrungen an dem zweiten Halteelement 4 mit jeweils korrespondierenden Bohrungen am ersten Halteelement 2 in Eingriff gelangen. Analog zum ersten Lagerbereich 22 weist das zweite Lager Element 4 einen zweiten Lagerbereich 42 auf, welcher schwenkbar am Lagerbock 10 gelagert wird.

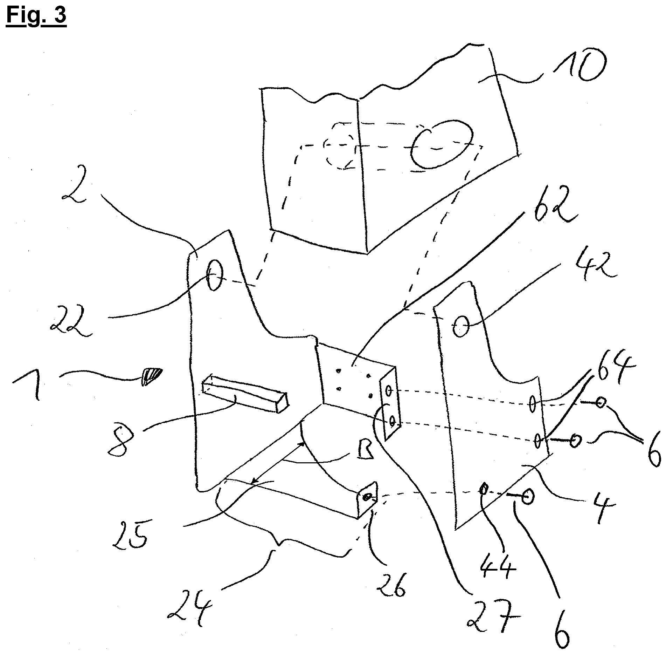

Bei der in Fig. 3 dargestellten Ausführungsform weist der erste Tragbereich 62, im Gegensatz zu der in Fig. 2 dargestellten Ausführungsform, einen zweiten Anschlag 27 auf. Dabei ist, ebenfalls im Gegensatz zu der in Fig. 2 dargestellten Ausführungsform, der zweite Tragbereich 64 nicht als blechartiger, in Richtung des ersten Halteelements ragender, Abschnitt des zweiten Halteelements 4, sondern als Aussparung ausgebildet. Auf diese Weise ist es möglich, sämtliche der Befestigungsmittel 6, welche zur Festlegung des zweiten Halteelements 4 am ersten Halteelement 2 dienen, von der Seite der Halteeinheit 1 einzubringen. Alle weiteren Merkmale der Ausführungsform von Fig. 3 entsprechen den Merkmalen der Ausführungsform in Fig. 2.

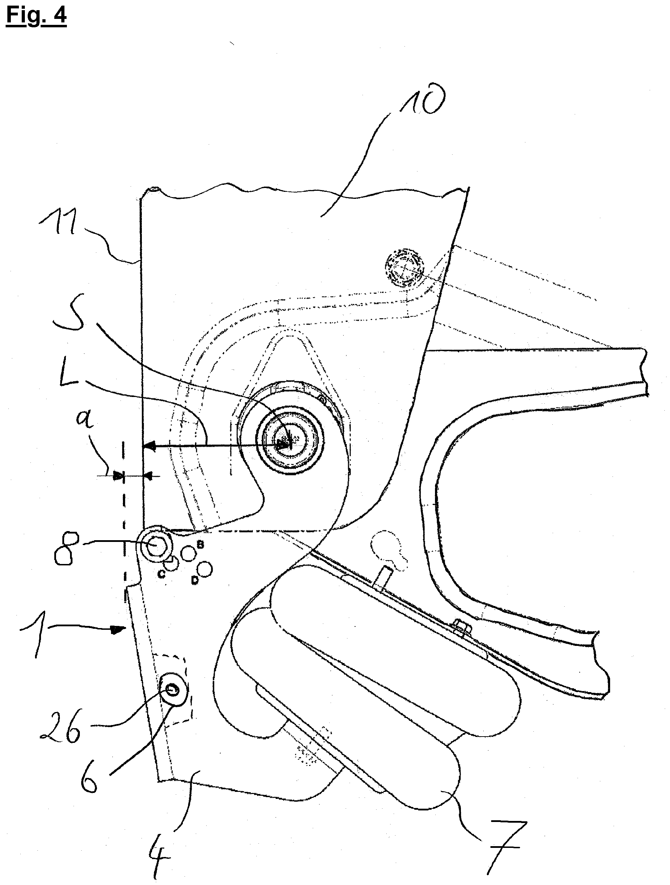

Fig. 4 zeigt eine Seitenansicht einer bevorzugten Ausführungsform der erfindungsgemäßen Halteeinheit 1 wobei insbesondere der orthogonale Abstand L der Vorderseite 11 des Lagerbocks 10 von der Schwenkachse S, sowie der maximale Versatz a der Halteeinheit 1 von der Vorderseite 11 des Lagerbocks 10 dargestellt ist. Weiterhin ist gezeigt, in welcher Lage die Hubeinheit 7 an der Halteeinheit 1 festgelegt ist und wie diese an ihrem der Halteeinheit 1 abgewandten Ende den Längslenker eines Nutzfahrzeuges nach oben drücken kann, um die Achse und somit ein Rad des Nutzfahrzeuges außer Eingriff mit der Straße zu bringen. Das Stützelement 8 ist in der linken in der vier möglichen Befestigungspositionen festgelegt wobei verständlicherweise der Versatz a das kleinstmögliche Maximum erreicht.

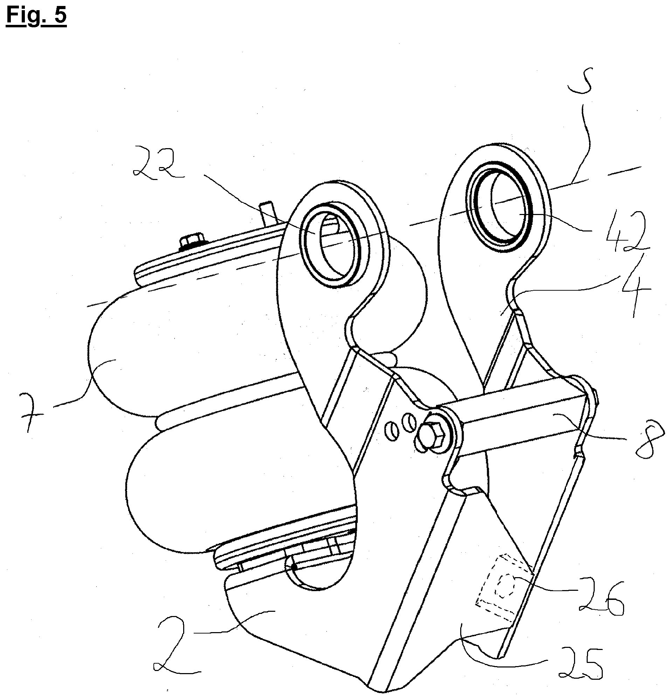

Fig. 5 zeigt eine perspektivische Ansicht einer bevorzugten Ausführungsform der Halteeinheit 1 mit einer daran festgelegten Hubeinheit 7. Bei dieser Ausführungsform wurden gleiche Bezugszeichen für die gleichen Merkmale der in den Figuren 1 bis 4 gezeigten Ausführungsformen verwendet. Besonders gut ist in dieser Figur zu erkennen, dass der erste Lagerbereich 22 und der zweite Lagerbereich 42 vorzugsweise koaxial zueinander und rotationssymmetrisch um die Schwenkachse S ausgebildet sind. Besonders bevorzugt sind somit auch die sich im Wesentlichen quer zur Schwenkachse S erstreckenden Abschnitte des ersten Halteelements 2 und des zweiten Halteelements 4 im Wesentlichen parallel zueinander ausgerichtet. Die Formulierung "im Wesentlichen" bedeutet für die vorliegende Anmeldung, dass kleinere Abweichungen von den jeweils beschriebenen geometrischen Merkmalen aufgrund von Fertigungstoleranzen oder geringfügig ungeraden Einbau der Einzelteile der Halteeinheit 1 trotzdem diese geometrischen Merkmale erfüllen sollen.

### Bezugszeichen:

- 1: - Halteeinheit
- 2: - erstes Halteelement
- 4: - zweites Halteelement
- 6: - Befestigungsmittel
- 7: - Hubeinheit
- 8: - Stützelement
- 10: - Lagerbock
- 11: - Vorderseite
- 22: - erster Lagerbereich
- 24: - erster Verbindungsbereich
- 25: - Querabschnitt
- 26: - erster Anschlag
- 27: - zweiter Anschlag
- 42: - zweiter Lagerbereich
- 44: - zweiter Verbindungsbereich
- 62: - erster Tragbereich
- 64: - zweiter Tragbereich
- 81: - Befestigungsposition
- a: - Versatz
- B: - Breite
- L: - orthogonaler Abstand
- S: - Schwenkachse

## Patentansprüche

1. Halteeinheit (1) für ein Achshebesystem eines Nutzfahrzeugs umfassend ein erstes Halteelement (2) und ein zweites Halteelement (4),
wobei das erste Halteelement (2) einen ersten Lagerbereich (22) und das zweite Halteelement (4) einen zweiten Lagerbereich (42) zur Lagerung der Halteeinheit (1), schwenkbar um eine Schwenkachse (S) an einem Lagerbock (10) eines Nutzfahrzeuges, aufweist,
wobei das erste Halteelement (2) einen ersten Verbindungsbereich (24) aufweist, der entlang einer Parallelen zur Schwenkachse (S) vom ersten Lagerbereich (22) beabstandet und an einem zweiten Verbindungsbereich (44) des zweiten Halteelements (4) festlegbar ist,
wobei der erste Verbindungsbereich (24) ausgelegt ist, das zweite Halteelement (4) parallel zur Schwenkachse (S) abzustützen,
**dadurch gekennzeichnet, dass**
der erste Verbindungsbereich (24) einen sich längs der Schwenkachse (S) erstreckenden Querabschnitt (25) und einen sich im Wesentlichen quer zur Schwenkachse erstreckenden Anschlag (26) aufweist.

2. Halteeinheit (1) nach Anspruch 1,
wobei zur Festlegung des ersten Verbindungsbereiches (24) am zweiten Verbindungsbereich (44) nur ein Verbindungsmittel (6) vorgesehen ist.

3. Halteeinheit (1) nach einem der vorhergehenden Ansprüche,
wobei der Anschlag (26) einstückig mit dem Querabschnitt (25) ausgebildet ist.

4. Halteeinheit (1) nach einem der vorhergehenden Ansprüche,
wobei der Anschlag (26) und der Querabschnitt (25) einstückig mit dem ersten Halteelement (2) ausgebildet sind.

5. Halteeinheit (1) nach einem der vorhergehenden Ansprüche,
wobei der Querabschnitt (25) eine längs der Schwenkachse (S) abnehmende Breite (B) aufweist,
wobei die Breite (B) des Querabschnitts (25) im Bereich des Anschlags (26) kleiner als ein 0,7-faches der Breite (B) auf Höhe des ersten Lagerbereiches (22) ist.

6. Halteeinheit (1) nach einem der vorhergehenden Ansprüche,
wobei das zweite Halteelement (4) am ersten Halteelement (2) mit einem Verbindungsmittel (6) festlegbar ist, welches für einen Anwender in einer parallel zur Schwenkachse (S) verlaufenden Richtung zugänglich ist.

7. Halteeinheit (1) nach einem der vorhergehenden Ansprüche,
aufweisend einen am ersten Halteelement (2) ausgebildeten ersten Tragbereich (62) und einen am zweiten Halteelement (4) ausgebildeten zweiten Tragbereich (64),
wobei eine Hubeinheit (7) form- und kraftschlüssig an dem ersten Tragbereich (62) und/oder dem zweiten Tragbereich (64) festlegbar ist,
wobei sich der erste Tragbereich (62) und/oder der zweite Tragbereich (64) im Wesentlichen planar zu einer Ebene erstrecken, die parallel zur Schwenkachse (S) liegt.

8. Halteeinheit (1) nach Anspruch 7,
wobei der erste Tragbereich (62) eine größere Erstreckung parallel zur Schwenkachse aufweist als der zweite Tragbereich (64).

9. Halteeinheit (1) nach einem der Ansprüche 7 oder 8,
wobei der erste Tragbereich (62) bereichsweise zwischen der Hubeinheit (7) und dem zweiten Tragbereich (64) angeordnet ist,
wobei der zweite Tragbereich (64) die Hubeinheit (7) indirekt über den ersten Tragbereich (62) abstützt.

10. Halteeinheit (1) nach einem der Ansprüche 7 bis 9,
wobei der zweite Tragbereich (64) als Aussparung des zweiten Halteelements (4) ausgebildet ist,
wobei der erste Tragbereich (62) an seinem, an den zweiten Tragbereich (64) grenzenden distalen Ende einen zweiten Anschlag (27) aufweist, an welchem das zweite Halteelement (4) abgestützt und festlegbar ist.

11. Halteeinheit (1) nach einem der vorhergehenden Ansprüche,
wobei am ersten Halteelement (2) oder am zweiten Halteelement (4) ein Stützelement (8) festlegbar oder ausgebildet ist,
wobei das Stützelement (8) die Verschwenkbarkeit der Halteeinheit (1) bezogen auf den Lagerbock (10) begrenzt.

12. Halteeinheit (1) nach einem der vorhergehenden Ansprüche,
wobei der Lagerbock (10) eine Vorderseite (11) aufweist, welche einen orthogonalen Abstand (L) von der Schwenkachse (S) aufweist,
wobei die Halteeinheit (1) einen maximalen Versatz (a) von einer durch die Vorderseite (11) und parallel zur Schwenkachse (S) verlaufenden Ebene aufweist,
wobei der maximale Versatz (a) zum orthogonalen Abstand (L) in einem Verhältnis von 0,01 bis 0,6 und bevorzugt von 0,03 bis 0,5 steht.

## Claims

1. Holding unit (1) for an axle lifting system of a commercial vehicle, comprising a first holding element (2) and a second holding element (4), wherein for mounting the holding unit (1) so as to be pivotable about a pivot axis (S) on a bearing block (10) of a commercial vehicle, the first holding element (2) has a first bearing region (22) and the second holding element (4) has a second bearing region (42),
wherein the first holding element (2) has a first connection region (24) which along a parallel line to the pivot axis (S) is spaced apart from the first bearing region (22) and is securable on a second connection region (44) of the second holding element (4),
wherein the first connection region (24) is conceived for supporting the second holding element (4) in a manner parallel to the pivot axis (S),
**characterized in that**
the first connection region (24) has a transverse portion (25) that extends along the pivot axis (S) and has a detent (26) that extends in a manner substantially transverse to the pivot axis.

2. Holding unit (1) according to Claim 1,
wherein only one connection means (6) is provided for securing the first connection region (24) on the second connection region (44).

3. Holding unit (1) according to one of the preceding claims,
wherein the detent (26) is configured so as to be integral to the transverse portion (25).

4. Holding unit (1) according to one of the preceding claims,
wherein the detent (26) and the transverse portion (25) are configured so as to be integral to the first holding element (2).

5. Holding unit (1) according to one of the preceding claims,
wherein the transverse portion (25) has a width (B) that decreases along the pivot axis (S),
wherein the width (B) of the transverse portion (25) in the region of the detent (26) is smaller than 0.7 times the width (B) at the height of the first bearing region (22).

6. Holding unit (1) according to one of the preceding claims,
wherein the second holding element (4) is securable on the first holding element (2) by way of a connection means (6) which is accessible to a user in a direction that runs in a manner parallel to the pivot axis (S).

7. Holding unit (1) according to one of the preceding claims, having a first support region (62) that is configured on the first holding element (2), and a second support region (64) that is configured on the second holding element (4),
wherein a lifting unit (7) is securable in a form-fitting and force-fitting manner on the first support region (62) and/or on the second support region (64),
wherein the first support region (62) and/or the second support region (64) extend(s) in a manner substantially planar in relation to a plane which is parallel to the pivot axis (S).

8. Holding unit (1) according to Claim 7,
wherein the first support region (62) has an extent parallel to the pivot axis that is larger than that of the second support region (64).

9. Holding unit (1) according to either of Claims 7 and 8,
wherein the first support region (62) in regions is disposed between the lifting unit (7) and the second support region (64),
wherein the second support region (64) supports the lifting unit (7) indirectly by way of the first support region (62).

10. Holding unit (1) according to one of Claims 7 to 9,
wherein the second support region (64) is configured as a clearance of the second holding element (4),
wherein the first support region (62) at the distal end thereof that is adjacent to the second support region (64) has a second detent (27) on which the second holding element (4) is supported and securable.

11. Holding unit (1) according to one of the preceding claims,
wherein a support element (8) is securable or is configured on the first holding element (2) or on the second holding element (4),
wherein the support element (8) limits the pivotability of the holding unit (1) in relation to the bearing block (10).

12. Holding unit (1) according to one of the preceding claims,
wherein the bearing block (10) has a front side (11) which has an orthogonal spacing (L) from the pivot axis (S),
wherein the holding unit (1) has a maximum offset (a) in relation to a plane that runs through the front side (11) and in a manner parallel to the pivot axis (S),
wherein the maximum offset (a) in relation to the orthogonal spacing (L) is at a ratio from 0.01 to 0.6, and preferably from 0.03 to 0.5.

## Revendications

1. Unité de maintien (1) pour un système de levage d'essieu d'un véhicule utilitaire, comportant
un premier élément de maintien (2) et un second élément de maintien (4), le premier élément de maintien (2) comprenant une première zone de montage (22) et le second élément de maintien (4) comprenant une seconde zone de montage (42) pour monter l'unité de maintien (1) en pivotement autour d'un axe de pivotement (S) sur un bloc de montage (10) d'un véhicule utilitaire,
dans laquelle
le premier élément de maintien (2) comprend une première zone de liaison (24) qui est écartée de la première zone de maintien (22) le long d'une parallèle à l'axe de pivotement (S) et qui peut être immobilisée sur une seconde zone de liaison (44) du second élément de maintien (4),
la première zone de liaison (24) est conçue pour soutenir le second élément de maintien (4) parallèlement à l'axe de pivotement (S),
**caractérisée en ce que**
la première zone de liaison (24) comprend une portion transversale (25) qui s'étend le long de l'axe de pivotement (S) et une butée (26) qui s'étend sensiblement transversalement à l'axe de pivotement.

2. Unité de maintien (1) selon la revendication 1,
dans laquelle
un seul moyen de liaison (6) est prévu pour immobiliser la première zone de liaison (24) sur la seconde zone de liaison (44).

3. Unité de maintien (1) selon l'une des revendications précédentes,
dans laquelle
la butée (26) est réalisée d'un seul tenant avec la portion transversale (25).

4. Unité de maintien (1) selon l'une des revendications précédentes, dans laquelle
la butée (26) et la portion transversale (25) sont réalisées d'un seul tenant avec le premier élément de maintien (2).

5. Unité de maintien (1) selon l'une des revendications précédentes,
dans laquelle
la portion transversale (25) présente une largeur (B) qui diminue le long de l'axe de pivotement (S),
dans la zone de la butée (26), la largeur (B) de la portion transversale (25) est inférieure à 0,7 fois la largeur (B), à hauteur de la première zone de maintien (22).

6. Unité de maintien (1) selon l'une des revendications précédentes,
dans laquelle
le second élément de maintien (4) peut être immobilisé sur le premier élément de maintien (2) par un moyen de liaison (6) qui est accessible pour un utilisateur dans une direction parallèle à l'axe de pivotement (S).

7. Unité de maintien (1) selon l'une des revendications précédentes, comportant une première zone de support (62) réalisée sur le premier élément de maintien (2) et une seconde zone de support (64) réalisée sur le second élément de maintien (4),
dans laquelle
une unité de levage (7) peut être immobilisée par coopération de formes et de forces sur la première zone de support (62) et/ou sur la seconde zone de support (64),
la première zone de support (62) et/ou la seconde zone de support (64) s'étendent sensiblement de façon planaire par rapport à un plan qui est parallèle à l'axe de pivotement (S).

8. Unité de maintien (1) selon la revendication 7,
dans laquelle
la première zone de support (62) présente une extension parallèle à l'axe de pivotement, qui est plus grande que celle de la seconde zone de support (64).

9. Unité de maintien (1) selon l'une des revendications 7 ou 8,
dans laquelle
la première zone de support (62) est agencée localement entre l'unité de levage (7) et la seconde zone de support (64),
la seconde zone de support (64) soutient l'unité de levage (7) indirectement par la première zone de support (62).

10. Unité de maintien (1) selon l'une des revendications 7 à 9, dans laquelle
la seconde zone de support (64) est réalisée sous forme d'échancrure du second élément de maintien (4),
à son extrémité distale adjacente à la seconde zone de support (64), la première zone de support (62) comprend une seconde butée (27) contre laquelle est appuyé et immobilisable le second élément de maintien (4).

11. Unité de maintien (1) selon l'une des revendications précédentes,
dans laquelle
un élément de soutien (8) est immobilisable ou réalisé sur le premier élément de maintien (2) ou sur le second élément de maintien (4),
l'élément de soutien (8) limite la mobilité en pivotement de l'unité de maintien (1) par rapport au bloc de montage (10).

12. Unité de maintien (1) selon l'une des revendications précédentes,
dans laquelle
le bloc de montage (10) présente une face avant (11) qui présente une distance orthogonale (L) de l'axe de pivotement (S),
l'unité de maintien (1) présente un décalage maximal (a) d'un plan qui passe par la face avant (11) et qui s'étend parallèlement à l'axe de pivotement (S),
par rapport à la distance orthogonale (L), le décalage maximal (a) présente une relation allant de 0,01 à 0,6 et de préférence de 0,03 à 0,5.
